# EUROPEAN PATENT APPLICATION

(11) **EP 3 217 347 A1**
(43) Date of publication of application: **13.09.2017**
(21) Application number: 17160223.8
(22) Date of filing: 10.03.2017
(51) Int. Cl.: G06Q 30/06, G06F 17/30, G06F 17/24, G06Q 10/10

(54) **METHOD AND COMMUNICATION DEVICE FOR PROVIDING PERSONAL DATA**

(30) Priority: 11.03.2016 NL 2016417
(71) Applicant: ForGroup B.V., 2291 MK Wateringen (NL)
(72) Inventor: LANDMAN, Lars, 2426 TS Delft (NL); LANDMAN, Pieter Jan, 2291 MK Wateringen (NL); LANDMAN, Stan Joris, 2291 MK Wateringen (NL)
(74) Representative: EP&C

(57) **Abstract**

A method of providing selections of personal data to plural servers of requesting parties, the personal data relating to a person, the method comprises:
transmitting, e.g. by a personal communication device of the person, plural different data form identification codes to an intermediary server, transmitting by the intermediary server, plural data forms, each data form associated with a respective one of the data form identification codes, to the personal communication device, retrieving personal data from personal data fields of a personal dataset stored in the personal communication device, the personal dataset comprising data fields and data field identification codes, wherein the data field identification codes of the data fields from which the personal data is retrieved, correspond to the data field identification codes of the data fields of the data form, and wherein, in the data forms, corresponding data field identification codes are associated to corresponding data fields, filling in in the data fields of the data forms, the personal data retrieved from the personal data fields of the personal dataset having the same data field identification codes as in the data form, and transmitting, for each filled in data form, the personal data as filled in to a respective one of the plural servers of the requesting parties, wherein the data form identification code of each data form associates that data form with a respective server of the requesting parties, wherein at least two of the data form identification codes associate with different servers.

## Description

The invention relates to a method of providing a selection of personal data to plural servers of requesting parties and to a personal communication device configured for providing a selection of personal data to plural servers of requesting parties.

In online transactions, such as at online shops, airline companies, rental car company booking sites, credit card companies, hotel booking sites, as well as in non-online transactions, and many others, personal data may be requested when a person initiates a transaction. Commonly, the providing of personal data requires the person to fill in a digital or paper form. Mostly, the personal data may be stored in a form of a client profile or client account for future use. Nevertheless, each time a person requests services or goods from a party at which no such account exists yet, the same or similar data is to be entered repeatedly.

Several solutions to this problem have been devised, some of which are discussed below.

US2014/0258828 discloses an autofill browser extension. When shopping in a web shop, at checkout, a web form is to be filled in. Data is retrieved from a Personally Identifiable Information (PII) database. The user is presented with options in a pull down menu to select appropriate data from the PII database to be filled in in the web form.

US2004/0199921 discloses that personal data concerning a person is stored in a local data storage of a personal computer. When a person is required to provide personal data to be filled in in an online form, personal data is fetched from the local data storage. A mapping is attempted in order to attempt to map the personal data as stored in the local storage to the data fields as required to be filled in in the online form. As different terminology may be used in the online form, a result of the mapping is displayed to a user, and if approved by the user, the data is transmitted.

US6199079 discloses a method of automatically filling in forms presented by web pages in online transactions. A form identifier corresponds to a particular online form. Using user metadata in a user metadata database, a transformation is performed in order to allow to fill in data in the form.

A disadvantage of the known solutions, is that they require a processing in order to provide that appropriate data is filled in in the data fields of the data form. For example, forms may require different information or may use different labels for the same information, or may combine information in data fields of the form in a different way. For example, one form may have separate fields for surname and maiden name, other forms may request to combine surname and maiden name into one data field using a format such as maiden name, surname. Other forms may require a maiden name and initials, etc. As a result, personal data other than the requested data may be filled in in an attempt to automatically fill the form, or the user may be required to select and/or correct the filling of the form.

Furthermore, when a user manually fills in data, errors may be made, due to typographic errors, unreadable hand writing, the user being confused, distracted, etc.

As a result of incorrect providing of data, resulting damage may occur. For example, ordered goods may be sent to an incorrect or incomplete address, causing delivery failure of the goods.

The invention intends to provide personal data in a way that is both user convenient and safe.

In order to achieve this goal, according to an aspect of the invention, there is provided a method of providing selections of personal data to plural servers of requesting parties, the personal data relating to a person, the method comprising:
- transmitting, e.g. by a personal communication device of the person, plural different data form identification codes to an intermediary server;
- retrieving, by the intermediary server, from a database of the intermediary server, plural data forms, each data form associated with a respective one of the data form identification codes;
- transmitting by the intermediary server, the data forms to the personal communication device;
- retrieving, by the personal communication device, from the data forms, data field identification codes of the data fields of the data forms;
- retrieving, by the personal communication device, personal data from personal data fields of a personal dataset stored in the personal communication device, the personal dataset comprising data fields and data field identification codes associated with the data fields, wherein the data field identification codes of the data fields of the personal dataset from which the personal data is retrieved, correspond to the data field identification codes of the data fields of the data form; and wherein, in the plural data forms, corresponding data field identification codes are associated to corresponding data fields,
- filling in, by the personal communication device, in the data fields of the data forms, the personal data retrieved from the personal data fields of the personal dataset having the same data field identification codes as the data field identification codes of the respective data fields of the data form,
- transmitting, for each filled in data form, the personal data as filled in in that data form, e.g. via the intermediary server, to a respective one of the plural servers of the requesting parties, wherein the data form identification code of each data form associates that data form with a respective one of the plural servers of the requesting parties, wherein at least two of the data form identification codes associate with different ones of the servers of the requesting parties. According to the invention, the data forms are held by an intermediary server. Each data form is identified by a data form identification code. Each data form comprises data fields having a data field identification code. Personal data of a person is stored in the personal communication device. The personal communication device may be a smart phone, a desktop computer, a notebook, a tablet, wearable, etc. The personal data may be physically stored in the personal communication device or may, by the personal communication device, be accessed from a personal online data storage facility, such as Dropbox, one drive, etc. or other networked "in the cloud" data storage. The personal data is stored in personal data fields. Each personal data field is provided with a data field identification code. The data field identification code identifies an intended content of the respective data field. Thus, for example a data field identification code may be an e.g. binary, numeric, alphabetical, alphanumeric code that refers to e.g. "last name", "passport number", etc. Likewise, the data form also comprises data fields in which data is to be filled in. Likewise to the personal data fields, the data fields in the data form are provided with data field identification codes. Throughout the multiple forms stored at the intermediary server, the same data field identification codes are used to identify the same contents. Likewise, in the personal data, the same data field identification codes are used to identify corresponding data fields. Thus, where in a data form a data field is identified by a particular data field identification code, e.g. a data field identification code that identifies a street name, the same data field identification code will be used for the same contents in other data forms held by the intermediary server, and the same or a corresponding data field identification code will be used in the personal data held by the personal communication device.

Hence, when personal data is required, e.g. in an online or offline transaction, a form is fetched from the intermediary server. The form is requested by means of a data form identification code. The code is sent to the intermediary server. The code may either be sent to the intermediary server by the personal communication device, or may be sent to the intermediary server by a server of a party that requests the personal data, such as the web shop, etc. The data form is then sent to the personal communication device by the intermediary server for completion by the personal communication device. The personal communication device derives from the data form the data field identification codes and fetches, from the personal data, the corresponding data fields that has the same (corresponding) data field identification codes. As the same data field identification codes are used both to identify data fields in the data form as well as data fields in the personal data, a one to one matching is provided that avoids any ambiguities, mismatches, etc., and therefore increases a reliability of providing appropriate data in the respective data fields of the data form. The matching between the data field identification codes in the data form and the data field identification codes in the personal data is made possible as the data forms are all issued by a same entity, namely by the intermediary server. Thus, in case an organisation (a requesting party) requires a person to provide personal data, instead of the organisation itself transmitting a form (e.g. in the form of a webpage with data fields or a paper form) to the user, the form is fetched from an intermediary server. Accordingly, the intermediary server may hold a plurality of data forms for a plurality of parties that request data from users. Throughout the forms, the same data form identification codes are applied for the same data. Thus, data may be consistently provided to the requesting parties, as the providing of the forms by the intermediate server, whereby the intermediate server provides that the different data forms make use of the same set of data field identification codes to provide that a same data field in the different data forms is associated with the same data field identification code throughout the forms. As the personal data fields in the personal dataset as well as the data fields in the data forms thus make use of the same set of data field identification codes, errors due to conversion, guessing, etc. may be avoided. The personal data may be requested by the requesting parties at different moments in time. Accordingly, the personal communication device may e.g. return the filled in data forms at different moments in time. The data forms may be different in that they require different information (i.e. have another subset of data fields), have a different layout, have a different logo, have a different explanation, and/or have a different recipient. The method according to the invention may be applied to any number of data forms to any number of parties, e.g. 2, 3, 4, 5 ... data forms to 2, 3, 4, 5,... parties. Each party may apply its own data form. Per party, i.e. per requesting party, multiple different forms may be used.

The data form identification code may be attached to a data form or comprised in a data form for identification of the data form. When the intermediary server received from the personal communication device a filled in data form (e.g. as a data form, as a plurality of data fields, etc.), the intermediary server may forward the personal data as filled in to the respective requesting party, the respective requesting party for which the personal data as filled in in the data form is intended, is identified by means of the data form identification code enclosed with or associated with the data form. When transmitting the personal data as filled in in the data form to the intermediary server, the intermediary server may perform a conversion into a data format as desired by the requesting party, e.g. by mapping the filled in data onto a data form as desired by the requesting party. Alternatively, the personal communication device may forward the filled in data form or the data fields directly to the requesting party instead of via the intermediary server. In this case, the personal communication device may derive an address of the server of the requesting party from the data traffic already ongoing with the requesting party, e.g. data traffic ongoing when setting up a transaction. Thereto, the intermediary server may send a destination address where the filled in form is to be sent to, to the personal communication device.

The data form are transmitted to different requesting party servers, whereby a destination of the data form that has been filled in, is derived from the data form identification code. When the personal communication device transmits the filled in data forms to the intermediary server, the intermediary server may, based on the data form identification code of the received data form, transmit the filled in data form (or the data therein), to a requesting party server. When the personal communication device transmits the data form that has been filled in directly to the requesting party server, the personal communication device may derive a destination address from data form identification code as follows: the data form associated with that data form identification code may contain the destination address, or the destination address may be transmitted to the personal communication device in response to the requesting of the data form, e.g. may be transmitted together with the data form, Thus, the data form identification codes associate the different data forms with the different requesting party servers, so as to provide that each data form, when filled in, is transmitted to its associated requesting party server. For example, when the mobile communication device requests a first and a second data form by sending a first and a second data form identification code, the personal communication device fills in the first and second data form as described. The first data form is then sent to a first one of the requesting party servers, and the second data form is sent to a second one of the requesting party servers. The first data form identification code associates the first data form (or the contents of those data fields as transmitted) to the first one of the requesting party servers, in other words provides that the first data form or the data as filled in in the first data form is sent to the first one of the requesting party servers. The second data form identification code associates the second data form (or the contents of those data fields as transmitted) to the second one of the requesting party servers, in other words provides that the second data form or the data as filled in in the second data form is sent to the second one of the requesting party servers. As described above, transmission may take place via the intermediary server (the intermediary server deriving from the data form identification code(s) to which requesting party server(s) the data as filled in in that data form is to be sent) or alternatively the requesting party server is derived from the data form identification code as described above (in that the destination is comprised in the data form or attached to the data form that is sent by the intermediary server to the personal communication device in response to the transmission of the data form identification code from the personal communication device to the intermediary server, etc.)

It will be understood that, throughout this document, the term person or user may refer to a natural person, a legal person (such as a company, business, etc.) or a group of persons. Also, the terms person and user may refer to the same and hence may be interchanged.

The personal communication device may be a smartphone, notebook, tablet, wearable personal device, personal computer of any other data processing device. The personal communication device may communicate with the intermediary server by any suitable means, such as by means of the internet, a private data network, a virtual private network, a telecommunication network, local area network (LAN), wide area network (WAN), communication by modulation of a light source (Li-fi), etc.

The intermediary server may be any data processing device that is configured to transmit data forms to the data communication devices. The intermediary server may be a single server acting on behalf of different requesting parties. Alternatively, the intermediary server may be formed by plural servers, e.g. each serving a particular group of users or each serving a particular group of requesting parties. The requesting parties that require personal data may be web shops selling goods and/or services, commercial or governmental organisations, etc. The requesting parties may each communicate via their own server. The term server is understood to refer to a data server, a data communication entity capable of communicating via a communication network, such as a data communication network, e.g. the internet, a private data network or a virtual private network. The server may e.g. be a webserver or other data processing device. Each requesting party may request a respective selection (a respective subset) of the personal data of the person by means of their respective server. The intermediary server may be implemented by any data server provided with suitable program instructions and provided with a data base of data forms. The intermediary server forms an intermediary between the requesting servers and the personal communication device. The intermediary server is connected to the internet or any other communication network to provide data communication with the personal communication device and the servers of the requesting parties. The term requesting party may be understood as a server of a requesting party, i.e. a server of a party that requests personal data. Thus, where the term "requesting party" is used, this may be understood as "server of requesting party". The term "servers of requesting parties" may be understood as "requesting party servers", i.e. each requesting party being provided with a server, i.e. a requesting party server.

When a data form is required, the person may enter at the personal communication device, a data form identification code and submit it to the intermediary server. Alternatively the data form identification code may be entered by reading, by the personal communication device, an optically readable code, such as a bar code or QR code or receiving the code from a token, such as a wireless token, e.g. provided in a shop, business premises, by means of near filed communication, virtual reality, visual scanning; etc. Many other ways of the personal communication device obtaining the code are imaginable. For example, in an online environment, e.g. when completing an online transaction, a person is required to provide personal data. A web based environment, may provide a web page, such as a html (hypertext mark-up language) page to the personal communication device for display by an internet browser of the personal communication device. The web page may form example comprise a link to the form. The link may comprise a hyperlink requiring the person to activate the link by clicking, tapping, etc. Alternatively, the web page contains a request for the data form, the request to be sent to the intermediary server in order to fetch the data form from the intermediary server, when the browser processes the web page. Hence, the data form may e.g. be displayed to the user as content embedded in the web page. A hyperlink in the data form may be used to embed other content therein, such as images, a signature, a payment function, etc.

The personal data in the personal data set may comprise name, address, postal delivery address, bank account data, credit card data, date of birth, place of birth, marital status, citizenship number, passport number, driving license number, medical and/or health data, career data, CV, cars, boats, public transportation chip card data, education, business data, licenses, allergies, signature etc.

The database of the intermediary server may hold a plurality of data forms, whereby forms are sent to the personal communication device based on the data form identification code. All personal data is stored at the personal communication device so as to increase a level of privacy. Correspondingly, no personal data may need to be stored in the intermediary server. Furthermore, the present method may assist the user in that the user does not need to create user accounts at plural requesting parties in order to maintain personal data at each requesting party: the requested personal data can simply be transferred upon request as described, thereby if needed avoiding separate user accounts at different parties. The data form identification code may be sent to the intermediary server resp. the requesting party in many ways, for example as a result of the user operating a button on a website, the user manually entering the code, via NFC, QR, IQR, barcode, Bluetooth, etc.

In an embodiment, the method further comprises:
- logging, e.g. by the personal communication device, the transmission of data fields to the server of the requesting party,
- amending, e.g. by the personal communication device or the user thereof, the entry of a data field in the personal dataset stored in the personal communication device,
- checking, e.g. by the personal communication device, from the logging, if the entry of the data field that has been amended has been transmitted before the amendment thereof, and
- in case the entry of the data field has been transmitted previously, retransmitting the amended entry of the data field to the server of the requesting party that received that entry previously.

Research regarding updating of databases has shown that on average, an estimated 30% to 40% of data in a system changes each year. As a result, data may get outdated quickly. As a result of outdated data, actions, such as delivery of ordered goods, sending of postal mail, attempts to reach a person, etc., may be unsuccessful. Therefore, corrective actions may be required, such as re-sending undeliverable postal mail, resending or forwarding postal packages, etc. According to an embodiment of the invention, when personal data changes, e.g. a change of address, the person may update the data as provided in the past. The personal communication device may have logged what data fields have been provided to which third parties (e.g. by logging the data field identification codes, the data as provided to the requesting party, as well as possibly an explanation text). The logging may hence take place by logging for each data field, to what requesting party/parties the respective data filled in in that data field has been provided and what contents of that data field has been provided. Alternatively, or in addition thereto, the logged may take place in a compact form (e.g. at the personal communication device), as follows: by logging at the personal communication device the data form identification codes of the data forms that have been sent, the personal communication device may derive therefrom what data fields have been transmitted to what parties. Accordingly, in an embodiment, the logging is performed by storing data form identification codes, and the checking is performed by deriving, from the stored data form identification codes, if the entry of the data field that has been amended has been transmitted before the amendment thereof, Logging the data form identification codes allows to reconstruct what data was send to whom, as the data form identification code provides access to what data was send (the contents of the data form) as well as to whom it has been sent (as the requesting party to which the data has been sent, has been derived from the data form identification code) while requiring a low memory capacity, as the amount of data to be logged is kept low, thus allowing the logging at a low memory requirement.

The personal communication device may present an overview of the personal data as sent, to the person, for example in the form of a table, overview, etc. for example, an overview may be provided that presents what data has been sent to whom. Having updated the personal data, the personal communication device may for example display an overview of the requesting parties to which the data fields that have been updated now, have been sent previously. Accordingly, the person may decide to transmit the updated data field(s) of the personal data to all or to a selection thereof.

In an embodiment, the data form identification code comprises a requesting party location identification, the method comprising: routing by the server of the requesting party, the received personal data to a location based on the requesting party location identification. Hence, the location identification may be applied to address the personal data as filled in to a destination at the requesting party. For example, assume that a company operates plural service desks at a same site. The location code may then be transmitted with the personal data back to the requesting party, which enables the requesting party to direct the received personal data to the corresponding service desk. Thus, the location code may be applied to route, as the requesting partly, the received personal data to a destination associated with the location code.

In an embodiment, the data form identification code comprises at least one of a requesting party organisation identification, a requesting party form identification and a requesting party location identification, the method comprising:
- deriving, by the intermediary server, from the data form identification code, the at least one of the requesting party organisation identification, the requesting party form identification and the requesting party location identification, and
- retrieving, by the intermediary server, from a database of the intermediary server, a data form associated with the at least one of the requesting party organisation identification, the requesting party form identification and the requesting party location identification.

Accordingly, the data form identification code may be built up in a structured way, e.g. comprising an identification of the organisation (the requesting party). The further data may enable the organization to provide plural forms, and, depending on the circumstances, provide one of the plural forms. For example, the requesting party may prepare different forms depending on location (the appropriate form being selectable by means of the location identification) or depending on circumstances (the appropriate form being selectable by means of the location information). A language may be associated to the form as follows: the personal communication device, when transmitting the data form identification code to the intermediary server, also transmits a language code to the intermediary server. The language code may for example be set by the user of the personal communication device. For example, the language may be derived from a general language setting of the personal communication device or may be user set or entered by the user as part of the personal data or associated settings. Hence, a user, even when residing it another country, may receive the data form in his/her own language, as the language of the form may be altered in accordance with the user set language code. The intermediary server may hence select or translate the form into a language as desired: the intermediary server may hold, for each data field identification code, an explanatory text in a plurality of languages, allowing the intermediary server to provide explanatory text with the data form in the selected language. Again, as the different forms consistently use the same data field identification code for the same personal data, one translation table may suffice to translate different forms in the desired language. As another example, a language may be associated to the data form based on the at least one of the requesting party organisation identification, the requesting party form identification and the requesting party location identification. In an embodiment, an identification key that identifies the person of the personal communication device, is stored in the intermediary server, the method comprising:
- transmitting by the personal communication device the identification key personal communication device to the intermediary server, and
- verifying an identity of the person by comparing, by the intermediary server, the received identification key to the stored identification code. The person may be identified based on a combination of 2 or more of Email address user/company, visible ID of user a provided at the personal communication device (e.g. an app running at the personal communication device), invisible ID of the user as prepared at the intermediary server or the personal communication device (e.g. the app), phone number of the user, password of the user, IMEI (international mobile equipment identity) of the personal communication device, MAC address of the personal communication device. Serial number of the personal communication device. Preferably, a combination of a code that identifies the person and a code that identifies the personal communication device is applied.

In an embodiment, a data form comprises a first data sub form and a second data sub form, wherein personal data from a personal data set of a first person is loaded into the first data sub form and personal data from a personal data set of a second persons is loaded into the second data sub form. The data may be provided from personal data of plural persons stored in a same or in different personal communication devices. Combination may be initiated by sharing user ID's between the users, or by each user sending appropriate data to the intermediary server and the intermediary server combining the data as received from the plural users into a single data form.

In an embodiment, in case a data form as received by the personal communication device comprises a data field not comprised in the personal data as stored in the personal communication device, the method comprising:
updating, by the personal communication device, the personal data by:
   - adding to the personal data a data field,
   - retrieving a content as filled in by the user in the data field of the data form not comprised in the personal data
   - storing the retrieved contents in the added data field of the personal data, and
   - associating the data field identification code of the data field of the data form from which the contents was retrieved, to the added data field of the personal data. A description associated with the data field may also be stored (e.g. in a language as preselected by the user) with the personal data.

Some requesting parties may have specific data needs. As a straightforward example, requesting parties (organisations) may assign a membership number or client number to a person. Neither the information, nor a data field for holding such information may be present in the personal data. Accordingly, when a form comprises a data field having a data field identification code unknown yet in the personal data, the data field, the contents as filled in by the person (i.e. the user), and corresponding data field identification code may be added to the personal data Instead of being filled in by the person, the data to be added may be formed by data delivered by the requesting parties in return after receiving form data from the personal communication device and intermediary server. The requesting party may produce a personal id i.e. employee, customer, client number etc. and sends this to the intermediary server. This data or id is stored on the personal communication device and may be associated with the data form identification code or data field communication identification of the requesting party.

In an embodiment, the method, further comprises:
adding a data form to the intermediary server by:
   opening a new data form
   adding data fields to the data form
   selecting, for data fields of the data form, a data field identification code from a set of predefined data field identification codes,
   assigning a data form identification code to the data form, and
   storing the data form comprising the data fields and the data field identification codes, at the intermediary server.

Requesting parties (organisations) may thus define data forms and add the data forms to the data forms at the intermediary server, whereby data field identification codes from a set of predefined data field identification codes are associated with the data fields (this providing that a defined contents of the personal data is to be entered in the data fields by the personal communication devices when filling in the forms). New data field identification codes may be defined in case the requesting party would see a need for data that is not yet defined by the data fields of the personal data yet.

According to another aspect of the invention, there is provided a personal communication device configured for providing a selection of personal data to a server of a requesting party. With the personal communication device, the same or similar effects may be achieved as described above with reference to the method according to the invention. Also, the same or similar preferred embodiments may be provided, achieving the same or similar effects as described with reference to the preferred embodiments of the method according to the invention.

Further embodiments, advantages and effects will follow from the enclosed drawing and corresponding description, in which a non-limiting embodiment of the invention is disclosed, wherein:
Figure 1 depicts a schematic overview of a system based on which the method according to aspects of the invention will be explained;
Figure 2A depicts a schematic view of a data form identification code
Figure 2B depicts a table based on which location information is illustrated; and
Figure 2C depicts a geographic view based on which a relation between a data form identification code, a requesting party ,and a location code is illustrated;
Figure 3A and 3B depict logging tables based on which a logging of data as provided to parties according to an aspect of the invention, will be explained;
Figure 4 depicts data forms according to aspects of the invention;
Figure 5 depicts personal data as stored on the personal communication device and illustrates a partial delivery process of data to the requesting party; and
Figure 6A - 6G illustrate screenshots of an app running on a smartphone based on which the invention is further illustrated.

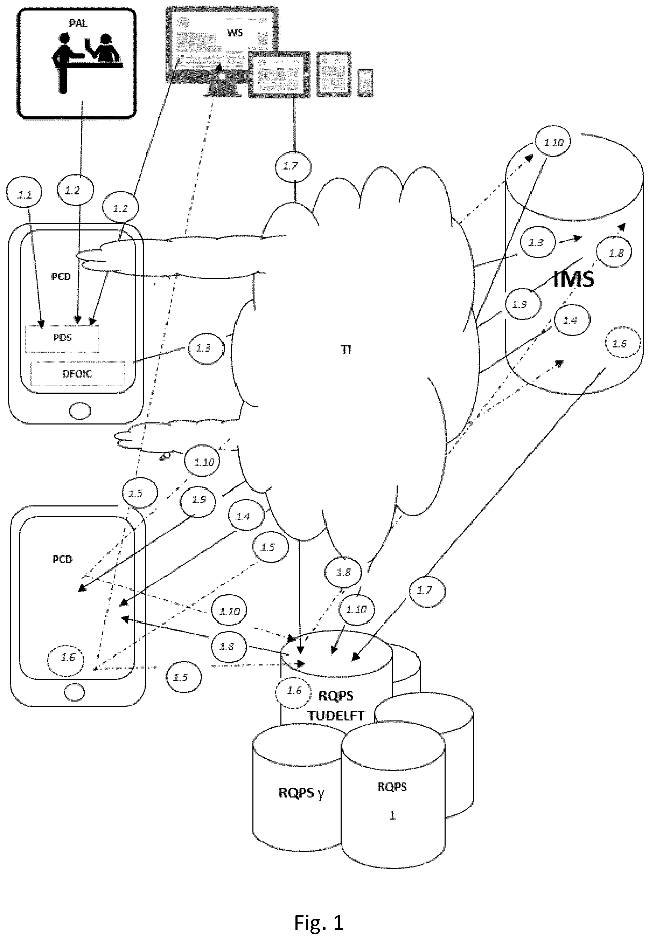

Figure 1 depicts a schematic overview based on which the method and personal communication device according to the invention will be explained. A personal communication device is configured to communicate with a network, such as the internet, by means of any communication interface, such as by means of Wi-Fi, Bluetooth, 3G or 4G or 5G etc. cellular data communication, LTE data communication, Li-Fl, etc. The personal communication device may be formed by any suitable device, such as a smartphone, a tablet, a notebook, a personal computer, a wearable device (such as a smart watch, glasses, virtual device), etc. For the present example, a smartphone will be used, it will however be understood that any other suitable device may be applied.

A person, using the personal communication device, may intend to interact with a plurality of third parties, e.g. at different moments in time. The person may interact with the parties for any reason: for example, the person may initiate online transactions, such as online ordering of goods or services. Alternatively, the person may interact with a requesting parties (an organisation) offline, i.e. in real life, while the organisation requests the person to provide personal data: for example, a person returning an article for repair at a service desk of a store, is required to complete a repair form.

The person, by means of the personal communication device PCD, initiates, for each data form, the sending of a data form identification code DFOIC to an intermediary server IMS. The intermediary server comprises a database DB in which data forms DFO from plural organisations (i.e. plural requesting parties RQP) are stored. The intermediary server fetches the corresponding data forms from the database, and transmits the data forms DFO to the personal communication device. At the personal communication device, personal data PD is stored. The personal data may be stored in a memory of the personal communication device, such as a solid state memory, e.g. a Random Access Memory. Alternative, the personal communication device may have stored the personal data in an online memory, such as an "in the cloud" data storage facility. The personal data is stored in data fields. Each data field DFI comprises data storage facility for entering a personal data item, such as surname, street, number, ZIP code, date of birth, place of birth, passport number, bank account number, etc. Also, a data field identification code DFIDC is associated to each data field. The data field identification code identifies the data field, thus defining what data is supposed to be stored in the data fields in question. The data forms that are transmitted by the intermediary server to the personal communication device also comprise data fields, in which requested data is to be entered by or on behalf of the person. In the data forms DFO, data field identification codes DFIDC are likewise associated to the data fields. The data field identification codes define what content is to be filled in in the respective data field. The data forms associated with different data form identification codes are (generally speaking) different, as different organisations may have different personal data needs. According to the invention, the data field identification codes of the data fields in the data forms correspond to each other, i.e. are the same, throughout the data forms for data fields in those data forms that are required to provide the same, i.e. corresponding, personal data. Moreover, data field identification codes of the data fields of the data form and data field identification codes of the data fields of the personal data correspond to each other. Thereby, it is ensured that a providing of personal data to the requesting parties is consistent, as the data forms for supplying the personal data to the requesting parties as well as the personal data all make use of a same set of data form identification codes, hence uniformly identifying personal data. As a result, errors in providing of data, translation, matching of terms, confusion between terms (e.g. confusing home address, postal delivery address, invoice address, etc.) may be prevented.

As the personal data is stored at the personal communication device, the user of the personal communication device remains in control of the personal data, i.e. is able to enter and amend the data in the personal communication device as desired. When the personal communication device receives the data form, the personal communication device may enter the personal data in the data form automatically, i.e. retrieve data from the data fields of the personal dataset which data fields have a corresponding data field identification code as the data fields of the data form. Before transmitting the data form from the personal communication device, the user may verify the data and if desired, amend, add or remove data, e.g. remove data in case the user does not agree that certain data is transmitted, or add data in case that the form contains a data field that is not yet comprised or not yet filled in in the personal data set stored in the personal communication device.

The intermediary server identifies the personal communication device by means of an identification key IK. The identification key IK is stored at the intermediary server. In an embodiment, the identification key is formed by a combination of a phone number of the user, IMEI (international mobile equipment identity) of the personal communication device, MAC address of the personal communication device, email address etc. Serial number of the personal communication device. The user of the personal communication device is identified at the intermediary server by the intermediary server by the personal identification code PIC.

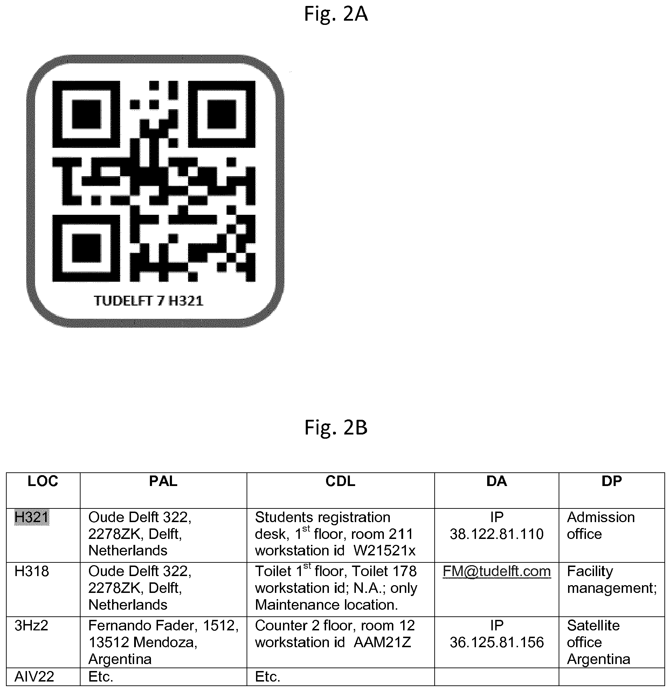

Referring to figure 1, the items 1.1 - 1.10 as identified therein may be described as follows:
1.1 Select on the PCD the person, company or group were a user wants to fill in the data for in the form.
1.2 Enter the DFOIC to select; the RQP, their DFO and the LOC the user is sending from and/or to. This can be done through a WS (Manually/button etc.) or shown/loaded on location (NFC/Manual input etc.)
1.3 Send the DFOIC to the IMS together with the preferred form language.
1.4 Sending the empty DFO with DFIDC in the preferred language to the PCD. Receiving the form on the PCD and filling the data stored in the device with the same DFIDC, by connecting the DFIDC. Also storing changed/added/deleted data and DFIDC on the device, together with the connected DFIDC and DFOIC and DD in preferred language.
1.5 The PCD sends the requested data to the IMS, data is not used for storage on the IMS, but for transportation means (except for identification purpose). It's also possible to fill the data directly by the PCD into the WS and continue processing the website page, or send the data directly to the RQPS.
1.6 Optional if needed, the data can be converted to an in-house format/file for the RQP, may be converted in the preferred language of the requesting party, performed by the PCD or the IMS or RQPS.
1.7 The data is send to the RQP, who delivers the data at the connected (Figure 2B) DA.
1.8 The RQP sends CN indirect to the IMS, or direct to the PCD, both ways are stored at the designated DFIDC and or DFOIC of the RQP on the PCD.
1.9 The IMS sends CN to the PCD were this is stored at the designated DFIDC and or DFOIC of the RQP (owner).
1.10 At a next visit on location or at the WS etc. the user can send any DFOIC from the PCD, the CN of the RQP stored on the PCD is added to the data send to the IMS, or connected WS, location etc. or to the RQPS. The user of the PCD can be recognized and linked to the CN of the RQP and their connected client data from RQPS for further treatment.

Figure 2A depicts a QR code of a Data Form Identification Code DFOIC e.g. "TUDELFT 7 H321", in the present example comprising a requesting party organisation RQP, a requesting party form identification DFO and a requesting party location identification LOC.

The requesting party organisation identification identifies the party (e.g. company, governmental organisation, etc.) in this example "TUDELFT = Technical University Delft. The requesting party form identification DFO identifies what form of the requesting party applies in this example "7" = Student Application Form TU Delft. The requesting party location identification code LOC may identify a the delivery address for the data send by the PCD. This can present the location (address, terminal, coordinate etc.) from where the data is send and/or a destination address of the requesting party, where the data should be delivered. In this example "H321": Students registration desk, 1st floor, room 211, terminal ID W21521x, IP address 38.122.81.110 (Figure 2b). The intermediary server or RQP server retrieves a corresponding data form from its database.

Figure 2B depicts an example of a location table of the RQP e.g. TU Delft, that can be stored on the requesting party server (RQPS) or on the intermediary server (IMS). This contains the address connected to the location LOC part of the DFOIC. This may be used for delivering the personal data to the required address of the RQP e.g. IP address, E-mail address, printer etc.

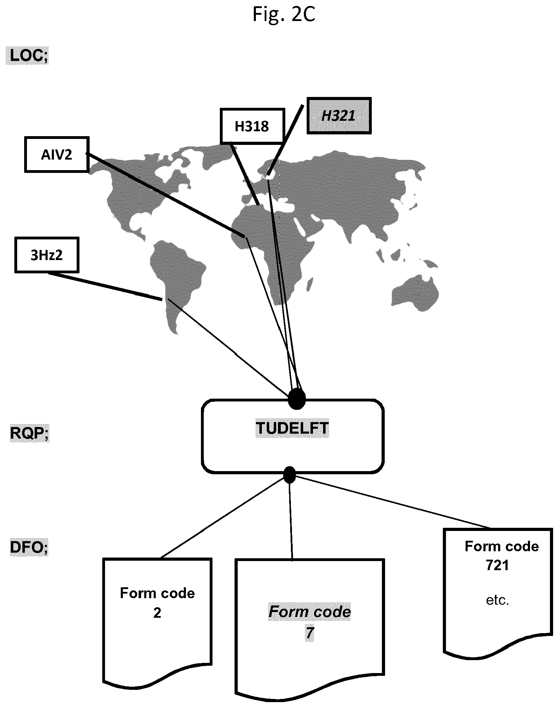

Figure 2C depicts a geographic view (content) of the relation between a form numbers, the location code both connected to every single company code. In this example DFOIC e.g. "TUDELFT 7 H321" it depicts that plural forms e.g. 2, 7, 721 etc. may be connected to the RQP "TUDELFT" and also several locations e.g. AIV2, H318, H321, 3Hz2 etc. may be connected to the RQP.

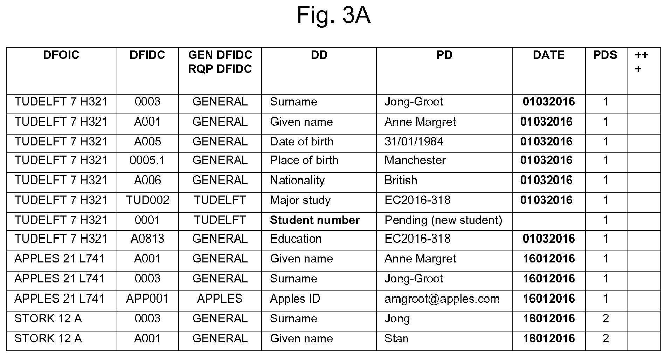

Figure 3A illustrates a table which data fields in which data forms have been transmitted to which party. This data may be stored in the personal communication device. As the personal communication device thereby memorizes what data fields have been supplied to whom, the personal communication device may be configured to send an update of a data field to those parties, in case a contents in the master data of such data field is changed by the user. Figure 3A depicts a table of the method building history on the personal communication device of all used basic and company (-ies) data fields, together with input values that are send by the personal communication device. When master data changes on the personal communication device, the invention compares this to the history data on the personal communication device and can make a proposal for the user of the device (or automated) to inform the requesting parties concerned by this change in the master data. The proposal can be suggested per requesting party RQP, or per RQP and data form DFO code, or per RQP and data form DFO code and location LOC of RQP, depending on the demands of the RQP.

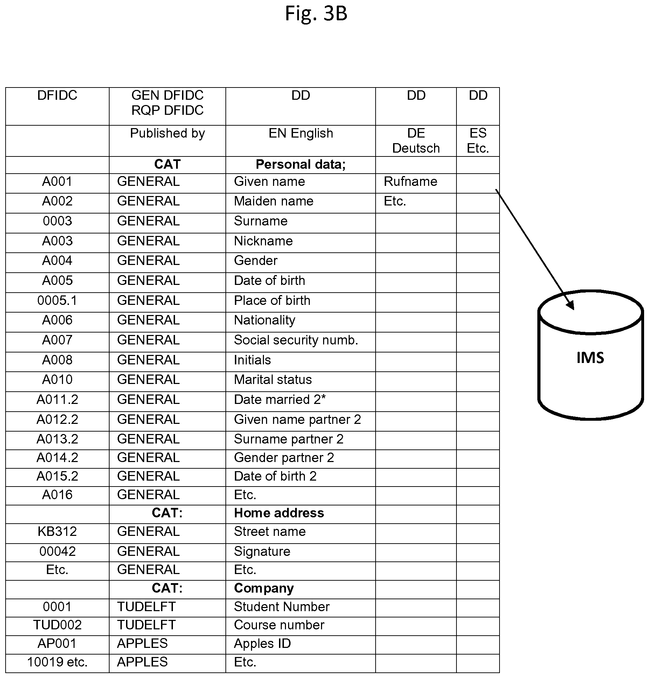

Figure 3B depicts a table of storing all basic and company (-ies) (i.e. requesting party) data fields on the intermediary server. All predefined basic fields GEN DFIDC and extra added company fields RQP DFIDC are stored on the intermediary server in the database DB. The requesting party can compose any Data Form (DFO) from this database DB and store this on the intermediary server IMS. The composed Data Forms (DFO) are connected to a Data FOrm Identification Code (DFOIC).

Once data has been provided to the requesting party as described with reference to Figure 1, the requesting party may transmit a confirmation to the personal communication device, either directly or via the intermediary server. The confirmation may e.g. provide a client number, etc. as applicable which identifies the person as a client/relation of the party in question. The personal communication device may associate such client number to the data form identification code DFOIC. Hence, when the same person initiates a transaction with the same party a next time, causing the same data form identification code to be requested, the personal communication device, having associated that data form identification code (or parts of DFOIC) to the client number, may, instead of requesting the form again, transmit the client number instead.

The above described updates in case of a change of personal data, may also be transmitted to the parties in association with the client number, thus to associate the changed personal data to the client number as assigned by the party in question.

Data forms may be combined by the personal communication device. For example, in case of a traffic accident involving two persons, one form part may be filled in by one person on the PCD, while the other by the other person.

In case a person seeks to get data from a party (such as company information, a sales brochure, etc.), the person may, at the personal communication device, enter the data form identification code of the party, and request, via the intermediary server, personal data of that party. Thereto, the data form identification code may be provided with a part or suffix that informs the intermediary server that data from the requesting party is requested. Hence, a requesting party (e.g. a company) may thereby make its data available, using the method as described in the present document.

The personal communication device may store a personal dataset for one person. Further personal data relating to further persons may be stored also, for example a group profile of a family, employees of an organisation, etc. Also, as in this document the term person may refer to natural persons as well as other entities (such as legal persons) the personal dataset may also relate to data of another entity, such as company data.

In case a data form requests for data not yet stored in the personal data set of the personal communication device, the personal communication device may, when encountering data field identification code not yet known to the personal communication device, request the user to complete the data field, add the data field and associated data field identification code to the personal data for storage in the personal communication device. Hence, the personal dataset may be dynamically updated as needed.

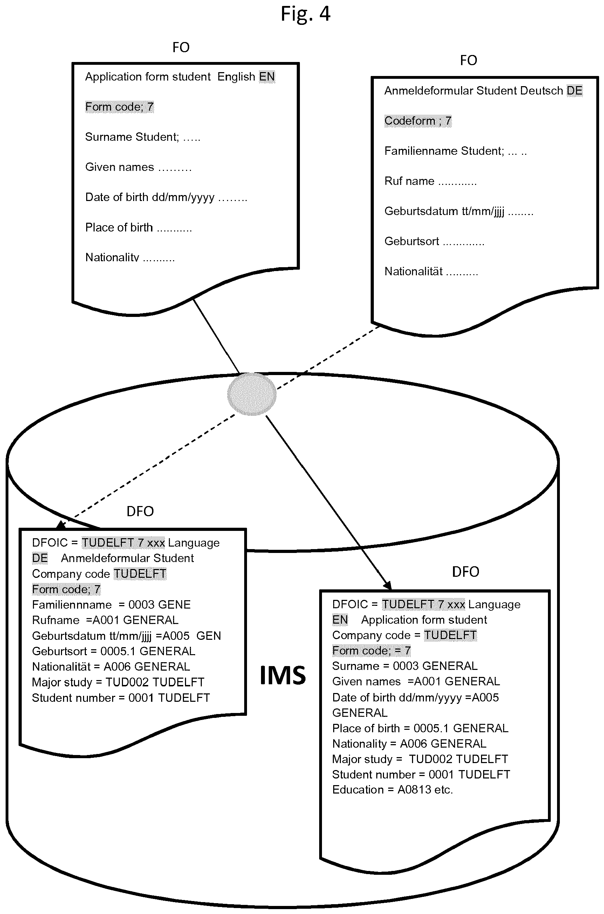

Figure 4 illustrates the process of forms FO from companies etc. in paper/website format etc., to composing and storing this into empty forms DFO on the intermediary server IMS. When a requesting party prepares a data form DFO, data fields DFI are added. To each data field, a data field identification code is associated. Thereto, when preparing the data form, a selection is made from a set of predefined basic data field identification codes, i.e. data field identification codes that are also used with data fields of other forms that request the same information. The predefined set of data field identification codes may e.g. be published at the intermediary server to be available to the requesting parties. The descriptions associated with data field identification codes may for example be selected from a pull down menu or a list. Correspondingly, for each data field, a user explanation (e.g. name, surname, etc.) is added for being displayed to the user when displaying the form. The user explanation may either be entered manually or may be automatically added, as the intermediary server associates an explanation to each data field identification code. Additional, specific data that is specific to the party in question may be requested by the party from the person by including in the data form additional, specific, data fields, such as payment options, arithmetic operations, connecting hyperlinks, photo's, drawings, signatures etc.

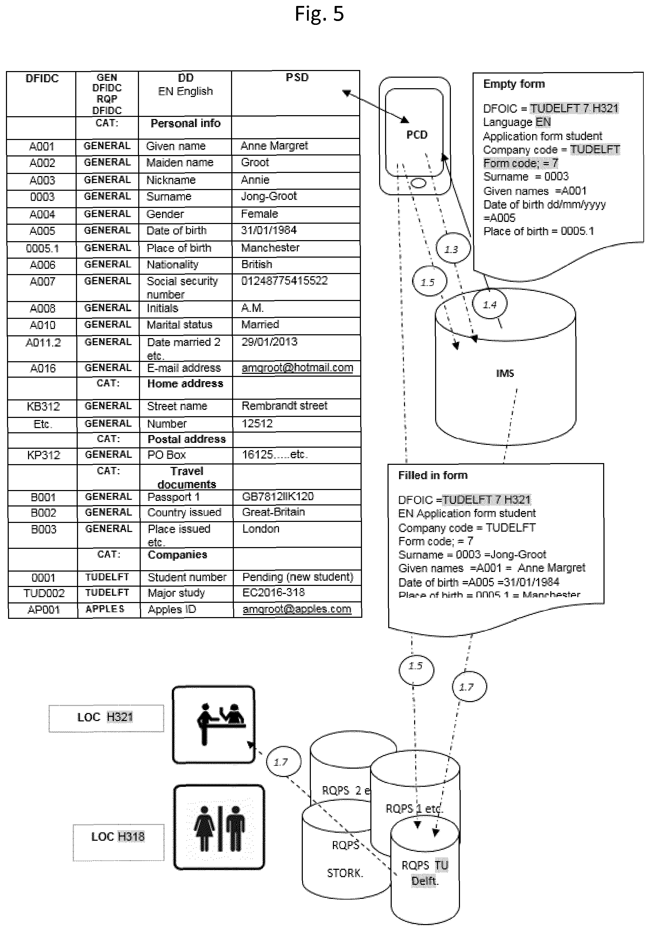

When a person intends to make use of the method as described in the present document for the first time the user may download an appropriate software program onto the personal communication device. The personal communication device may for example download the program in the form of a so called "app" from an app store available for software platforms such as Android, Apple, Microsoft Windows, Tizen, IOS, IOX, Flyme, Ubuntu, Symbian, Blackberry, Pebble OS, Fitbit, and Linux etc. Also, the app may be directly downloadable, e.g. from a website. The software program, once installed on the personal communication device, may provide that the personal communication device is configured to perform the actions as specified in the present document. Once the software has been installed on the personal communication device, the app composes a identification key IK from data such as an phone number of the user, password of the user, IMEI (international mobile equipment identity) of the personal communication device, MAC address of the personal communication device. Serial number of the personal communication device etc.. The intermediary server stores the identification key IK from the personal communication device for later identification. The user then enters personal data in data fields that may be grouped per category, as for example depicted in the table of figure 5, and the personal data is stored as a personal data set in the personal communication device, whereby the program associates the data field identification codes to the data fields of the personal data set. A personal identification code PIC per personal dataset on the personal communication device and on the intermediary server may be set to identify the personal dataset involved.

In case a user has installed the program on plural personal communication devices, each personal communication device may store the personal data set in its respective memory. When the devices have identified themselves by means of the identification key at the intermediary server, an update of the personal data set as performed in one of the personal communication devices may be transferred to the other personal communication devices for synchronisation purposes. The device where the personal data has been adjusted, may send the changes to the platform (i.e. the intermediary server), which may in turn distribute the changes to the connected devices to synchronize. The connection between those devices is registered on the IMS. Figure 5 depicts storing data on the personal communication device and partial delivery process of data to the requesting party,

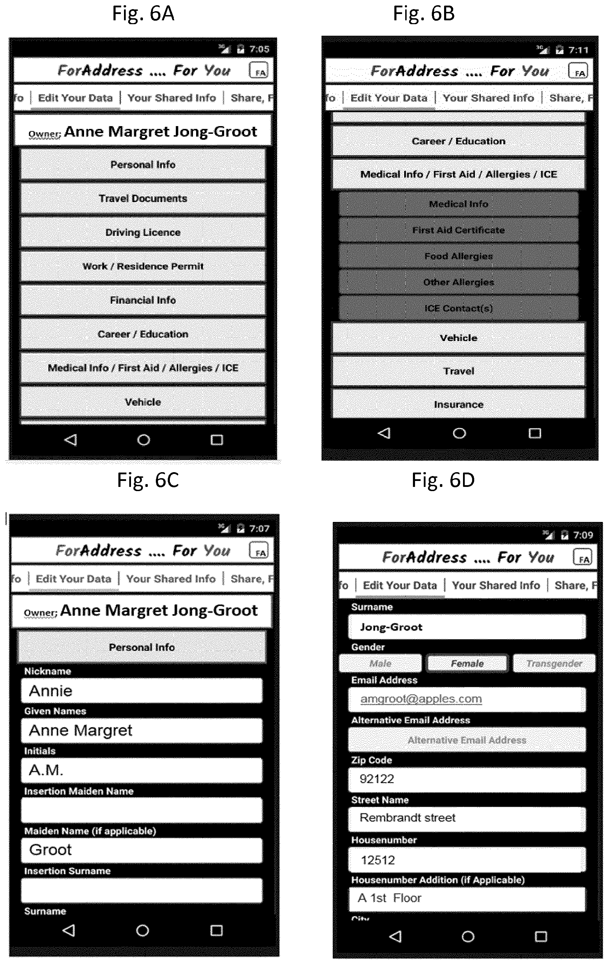

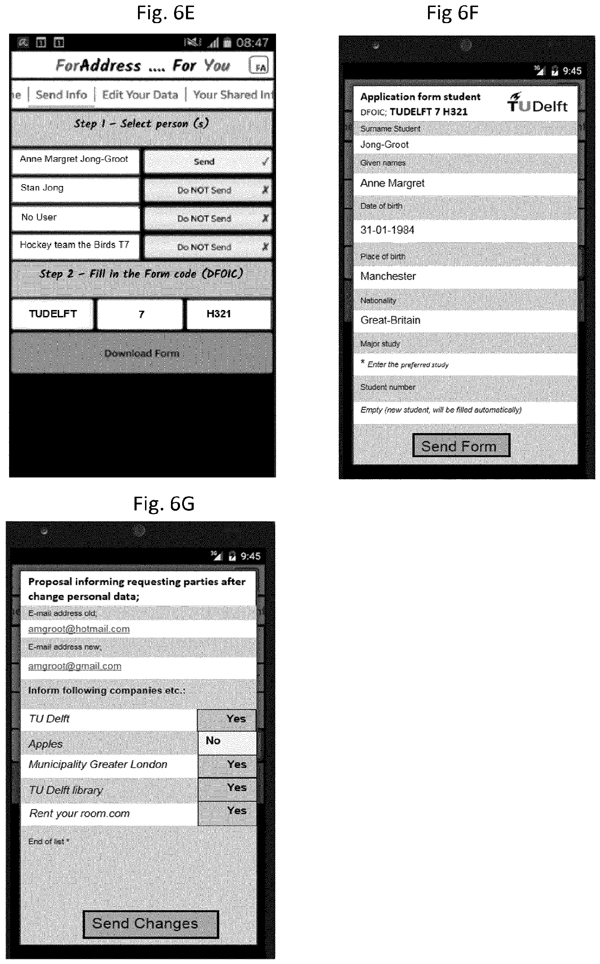

Figure 6A - 6G each depict a screen shot of an app running on a personal communication device such as a smartphone or tablet computer. Figure 6a and 6b illustrates how (sub) categories CAT within data fields can be organized on the personal communication device PCD. Figure 6c and 6d illustrates an example how personal data can be stored on the personal communication device PCD (Personal info category opened). Figure 6e illustrates how Anne Margret Jong selects herself in step 1 on her personal communication device (PCD) and step 2 select form e.g. TUDELFT 7 H321 to download the form on her PCD. Figure 6f illustrates personal communication device (PCM) after loading Application form student TUDELFT 7 H321. The data on the PCM are loaded automatically in the form. After filling in the missing Major study data; EC2016-318 the form is ready to send to the IMS. Figure 6g illustrates the proposal the PCM owner after changing the e-mail address.

Using the system as described, a person may also provide a business card by selecting in the App on the personal communication device, a data form with a defined business card format/layout, the requesting party submits to the person who provides the business card, a combination of identification of the requesting person PIC and requesting device IK, both know at the intermediary server. The providing person selects the business card and fills this identification key's in the personal communication device, the personal communication device PCD will provide the intermediary server with (a selection of) the personal data and the intermediary server sends this to the personal communication device of the person requesting the business card. In return, after receiving the business data on the personal communication device, the original requesting person may send personal business data with a data form to the original providing party by the intermediary server in order to swap business data between users. When business card data changes, e.g. by a change of an email address, phone number or company name, the logging and updating as described in the present document may be applied so as to send the updated information to the recipient. Similarly, a person (e.g. a company) may provide its data to others, for example by providing a data form identification code on its website, correspondence, such as its debit note. The person receiving the correspondence or seeking to enter data about the other person, may hence - instead of manually entering (e.g. typing) the data, request the data in a way similar to the steps as described with reference to the business card.

Furthermore, it is noted that, for example in case a person does not know a data form identification code, the person may request the intermediary server to provide a data form identification code, for example using a search string, browsing a list etc. This may for example be used in case a person seeks a particular service, while not knowing the corresponding data form identification code that would be required.

The invention also includes dynamic optimization of forms, through different options.

When the data form DFO loads from the IMS on the PCD, information may be retrieved from the personal dataset on the personal communication device, this personal data may be checked and overlaid in the requested data of the data form DFO. Depending on the information in the personal dataset , the data form may change the presentation and the path filling out the basic data form DFO, some data fields DFI of the data form can be left out in case a question is irrelevant e.g.: a man cannot be pregnant, the question: "are you pregnant?" is irrelevant when the person in the personal data set is male. The questing may be skipped and lead to another part of the data form.

The above is an example and this feature can be used for other purposes.

Furthermore when a data form DFO is loaded on the PCD, unanswered questions may still remain. When answering these questions, other questions can automatically be left out, when these are irrelevant e.g. the question; Do you have a student number? when answered with "No", the question: "what is your student number ?" is left out and may lead automatically to the question: "Do you want to apply for a student number ?". Another data form DFO with another data form identification code DFOIC may be triggered to load on the personal communication device PCD.

The above is an example and can also be used for other purposes.

This may result in a superior experience for users, since the questions which not apply to them are already left out during filling out the data form DFO on the personal communication device PCD.

List of abbreviations:
CAT= Connects a group (category) of DFI's or DFIDC with the same background.
CDL = Connected device or connected (physical) location.
CN = Client Number, customer number, employee code etc.
DA =Delivery address, fax number, e-mail address, phone number, IP address, server address etc..
DB = Database
DD = Description data field
DFI = Data Field.
DFIDC = Data Field Identification Code.
DFO = Data Form or Data set, connected Data Form Identification Code DFOIC
DFOIC = Data FOrm Identification Code (content; company + form and location id).
DFOIC SHD = DFOIC + Stored History Data.
DP = Department
EMA = E-mail address.
FO = Form as in paper or website etc. figuration.
GEN DFIDC = Data fields ID's published by the IMS for public use.
IK = Identification key device.
IMP = Intermediary Platform.
IMS = Intermediary Server.
LC = Language Code.
LOC = Location code (part of DFOIC)
PAL = Physical address location
PCD = Personal communication device.
PD= Personal data, group data, business data etc..
PDS = Personal dataset.
PHN = Phone
PIC = Personal Identification Code
PII = Personally Identifiable Information
PSD = Personal Stored Data.
RQP = Requesting party.
RQP DFIDC = Data fields ID's published by the RQP (s).
RQPS = Requesting Party Server.
TI = Telecom network, Wi-Fi, Li-Fi, Bluetooth, Internet etc.
WS = Website, external connection point etc.

## Claims

1. A method of providing selections of personal data to plural servers of requesting parties, the personal data relating to a person, the method comprising:
- transmitting, e.g. by a personal communication device of the person, plural different data form identification codes to an intermediary server;
- retrieving, by the intermediary server, from a database of the intermediary server, plural data forms, each data form associated with a respective one of the data form identification codes;
- transmitting by the intermediary server, the data forms to the personal communication device;
- retrieving, by the personal communication device, from the data forms, data field identification codes of the data fields of the data forms;
- retrieving, by the personal communication device, personal data from personal data fields of a personal dataset stored in the personal communication device; the personal dataset comprising data fields and data field identification codes associated with the data fields, wherein the data field identification codes of the data fields of the personal dataset from which the personal data is retrieved, correspond to the data field identification codes of the data fields of the data form; and wherein, in the plural data forms, corresponding data field identification codes are associated to corresponding data fields;
- filling in, by the personal communication device, in the data fields of the data forms, the personal data retrieved from the personal data fields of the personal dataset having the same data field identification codes as the data field identification codes of the respective data fields of the data form; and
- transmitting, for each filled in data form, the personal data as filled in in that data form, e.g. via the intermediary server, to a respective one of the plural servers of the requesting parties, wherein the data form identification code of each data form associates that data form with a respective one of the plural servers of the requesting parties, wherein at least two of the data form identification codes associate with different ones of the servers of the requesting parties.

2. The method according to claim 1, further comprising:
- logging, e.g. by the personal communication device, the transmission of data fields to the server of the requesting party,
- amending, e.g. by the personal communication device or the user thereof, the entry of a data field in the personal dataset stored in the personal communication device,
- checking, e.g. by the personal communication device, from the logging, if the entry of the data field that has been amended has been transmitted before the amendment thereof, and
- in case the entry of the data field has been transmitted previously, retransmitting the amended entry of the data field to the server of the requesting party that received that entry previously.

3. The method according to claim 2, wherein the logging is performed by storing data form identification codes, and wherein the checking is performed by deriving, from the stored data form identification codes, if the entry of the data field that has been amended has been transmitted before the amendment thereof,

4. The method according to any of the preceding claims, wherein the data form identification code comprises a requesting party location identification, the method comprising:
routing by the server of the requesting party, the received personal data to a location based on the requesting party location identification.

5. The method according to any of the preceding claims, wherein the data form identification code comprises at least one of a requesting party organisation identification, a requesting party form identification and a requesting party location identification, the method comprising:
- deriving, by the intermediary server, from the data form identification code, the at least one of the requesting party organisation identification, the requesting party form identification and the requesting party location identification, and
- retrieving, by the intermediary server, from a database of the intermediary server, a data form associated with the at least one of the requesting party organisation identification, the requesting party form identification and the requesting party location identification.

6. The method according to claim 5, wherein a language is associated to the data form based on the at least one of the requesting party organisation identification, the requesting party form identification and the requesting party location identification.

7. The method according to any of the preceding claims, wherein an identification key that identifies the person of the personal communication device, is stored in the intermediary server, the method comprising:
- transmitting by the personal communication device the identification key IK and personal identification code PIC to the intermediary server, and
- verifying an identity of the device and personal dataset by comparing, by the intermediary server, the received identification key IK and personal identification code PIC to the stored identification key and codes.

8. The method according to any of the preceding claims, wherein a data form comprises a first data sub form and a second data sub form, wherein personal data from a personal data set of a first person is loaded into the first data sub form and personal data from a personal data set of a second person is loaded into the second data sub form.

9. The method according to any of the preceding claims, wherein, in case a data form as received by the personal communication device comprises a data field not comprised in the personal data as stored in the personal communication device, the method comprising:
updating, by the personal communication device, the personal data by:
- adding to the personal data a data field,
- retrieving a contents as filled in by the user in the data field of the data form not comprised in the personal data
- storing the retrieved contents in the added data field of the personal data, and
- associating the data field identification code of the data field of the data form from which the contents was retrieved, to the added data field of the personal data.

10. The method according to any of the preceding claims, further comprising:
adding a data form to the intermediary server by:
opening a new data form
adding data fields to the data form
selecting, for data fields of the data form, a data field identification code from a set of predefined data field identification codes,
assigning a data form identification code to the data form, and
storing the data form comprising the data fields and the data field identification codes, at the intermediary server,.

11. A personal communication device configured for providing a selection of personal data to plural servers of requesting parties, the personal data relating to a person, the personal communication device configured for:
- transmitting plural different data form identification codes to an intermediary server;
- receiving, from the intermediary server, the data forms associated with the data form identification codes;
- retrieving from the data forms, data field identification codes of each data field of the data forms;
- retrieving personal data from personal data fields of a personal dataset stored in the personal communication device, the personal dataset comprising data fields and data field identification codes associated with the data fields, wherein the data field identification codes of the data fields of the personal dataset from which the personal data is retrieved, correspond to the data field identification codes of the data fields of the data form; and wherein, in the plural data forms corresponding data field identification codes are associated to corresponding data fields;
- filling in, in the data fields of the data forms, the personal data retrieved from the personal data fields of the personal dataset having the same data field identification codes as the data field identification codes of the respective data fields of the data form,
- transmitting, for each filled in data form, the personal data as filled in in that data form, e.g. via the intermediary server, to a respective one of the plural servers of the requesting parties, wherein the data form identification code of each data form associates that data form with a respective one of the plural servers of the requesting parties, wherein at least two of the data form identification codes associate with different ones of the servers of the requesting parties.
